# EUROPÄISCHE PATENTANMELDUNG

(11) **EP 0 997 825 A2**
(43) Veröffentlichungstag der Anmeldung: **03.05.2000**
(21) Anmeldenummer: 99120623.6
(22) Anmeldetag: 18.10.1999
(51) Int. Cl.: G06F 13/40

(54) **Netzteil für Spannungsversorgung eines Rechnerbusses**

(30) Priorität: 30.10.1998 DE 19850125
(71) Anmelder: SIEMENS AKTIENGESELLSCHAFT, 80333 München (DE)
(72) Erfinder: Fichtner, Norbert, Dipl.-Ing. (FH), 84069 Schierling (DE); Luber, Georg, Dipl.-Ing. (FH), 93158 Teublitz (DE); Ott, Hans, Ing. (grad.), 93053 Regensburg (DE)

(57) **Zusammenfassung**

Netzteil (1) für die Spannungsversorgung für einen Bus (6,7), der Information und Energie für die Bordnetze von Busankopplern und Busgeräten führt, insbesondere für den Bus der EIBA (European Installation Bus Association), wobei an einer Schnittstelle eines Busankopplers Busgeräte für Anwenderfunktionen anschließbar sind. Es ist vorgesehen, daß eine erste aktive Strombegrenzungseinrichtung (2) eine Stromentnahme aus dem Netzteil (1) begrenzt, und daß eine zweite Strombegrenzungseinrichtung (3) mit vergleichsweise höherem Innenwiderstand zur Entkopplung parallel geschalteter Netzteile und unter übertragungstechnischen Belangen ausgeführt ist, wobei zwischen beiden Strombegrenzungseinrichtungen (2;3) eine energiespeichernde Pufferschaltung (4) angeordnet ist, die zur Speicherung von Energie zwischen zwei Sendeimpulsen der Informationsübertragung ausgelegt ist.

## Beschreibung

Die Erfindung bezieht sich auf ein Netzteil für die Spannungsversorgung für einen Bus, der Information und Energie für die Bordnetze von Busankopplern und Busgeräten führt, insbesondere den Bus der EIBA (European Installation Bus Association), im einzelnen nach Gattungsbegriff von Anspruch 1. Hierbei können an einer Schnittstelle eines Busankopplers jeweils Busgeräte für Anwenderfunktionen angeschlossen werden.

Üblicherweise werden Busankoppler bzw. ihre Elektronik über eine zentrale Spannungsversorgung betrieben. Bei wenigen Busankopplern bzw. sogenannten Teilnehmerstationen ist eine derartige Spannungsversorgung aufwendig und unwirtschaftlich.

Der Erfindung liegt die Aufgabe zugrunde, ein Netzteil für dezentrale Spannungsversorgung zu entwickeln.

Die Lösung der geschilderten Aufgabe erfolgt durch ein Netzteil nach Anspruch 1. Eine erste aktive Strombegrenzungseinrichtung begrenzt die Stromentnahme aus dem Netzteil. Eine zweite Strombegrenzungseinrichtung mit vergleichsweise höherem Innenwiderstand sorgt für die Entkopplung parallel geschalteter Netzteile, und ist unter übertragungstechnischen Belangen ausgeführt. Zwischen beiden Strombegrenzungseinrichtungen ist eine energiespeichernde Pufferschaltung angeordnet, die zur Speicherung von Energie zwischen zwei Sendeimpulsen der Informationsübertragung ausgelegt ist. Das Netzteil hat die Leistung für die Grundversorgung der Busankoppler und der Busgeräte und für Senden von Information zur Verfügung zu stellen. Hierbei erfolgt eine Entkopplung der Spannungsversorgung von der Datenübertragung für Information. Die erste Strombegrenzungseinrichtung ist eine Aktivschaltung, die die Stromentnahme aus dem Netzteil begrenzt. Die zweite Strombegrenzungseinrichtung sorgt zur Entkopplung und ermöglicht schonend die Parallelschaltung von mehreren Netzteilen. Das Netzteil ist vorteilhaft so ausgelegt, daß es eine vorgesehene Anzahl von Busankopplern und Busgeräten versorgen kann. Bei größerem Bedarf lassen sich mehrere Netzteile parallel schalten. Erst ab einer bestimmten größeren Anzahl ist eine zentrale Spannungsversorgung herkömmlicher Art vorteilhafter.

Bei einem Bus nach Art der EIBA wird beim Senden die auf den Bus stehende Spannung in Rechteckimpulsen potentialmäßig heruntergezogen. Über mehrere Pulse kann durch das Netzteil mittels seiner Pufferschaltung ein mittlerer Strom gezogen werden, ohne einen entsprechend großen Gleichstrom dauerhaft zu ziehen.

Die zweite Strombegrenzungseinrichtung kann im einfachsten Fall ein ohmscher Widerstand sein. Es ist günstig, das Netzteil intern oder extern mit einer Impedanzanpassung zu versehen, die als Dämpfung die Übertragungsverhältnisse einer offenen Busleitung optimiert.

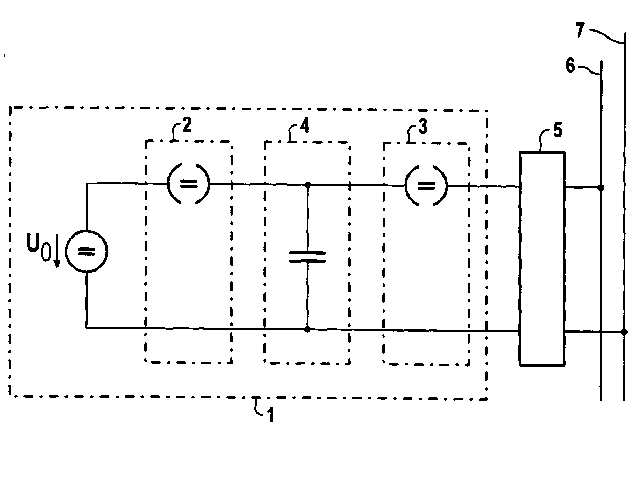

Die Erfindung soll anhand eines in der Zeichnung grob schematisch wiedergegebenen Ausführungsbeispiels näher erläutert werden:

Das Netzteil 1 erzeugt mit einer Quelle eine Spannung U₀. Es weist eine erste Strombegrenzungseinrichtung 2 und eine zweite Strombegrenzungseinrichtung 3 auf. Die erste Strombegrenzungseinrichtung 2 sollte vorteilhaft als aktive Schaltung ausgeführt sein, hingegen kann die zweite Strombegrenzungseinrichtung 3 im einfachsten Fall ein ohmscher Widerstand sein. Zwischen den beiden Strombegrenzungseinrichtungen ist eine energiespeichernde Pufferschaltung 4 angeordnet, die im wesentlichen als Kapazität ausgebildet sein kann. Im Netzteil, oder dem Netzteil 1 nachgeschaltet, kann vorteilhaft eine Schaltung zur Impedanzanpassung 5 vorgesehen sein, die als Dämpfung die Übertragungsverhältnisse einer offenen Busleitung mit den Leitern 6, 7 optimiert.

Die erste Strombegrenzungseinrichtung 2 ist so ausgeführt, daß die zulässige Gesamtleistung der angeschlossenen Spannungsquelle U₀ nicht überschritten wird, daß also die Stromentnahme entsprechend begrenzt wird. Damit die zulässige Sendeleistung für die Informationsübertragung hinsichtlich der erforderlichen Gesamtleistung nicht überschritten wird, ist der maximale Sendestrom durch die zweite Strombegrenzungseinrichtung 3 unter Berücksichtigung der Anforderungen der Übertragungstechnik begrenzt. Mit anderen Worten wird durch die zweite Strombegrenzungseinrichtung der maximale Sendestrom so begrenzt, daß bei maximal vorgesehener Anzahl parallel geschalteter dezentraler Netzteile die Sendestufe eines Busteilnehmers den Gesamtsendestrom noch aufnehmen kann. Die Entkopplung der dezentralen Spannungsversorgung durch parallel angeschaltete Netzteile erfolgt durch die zweite Strombegrenzungseinrichtung 3. In Verbindung mit der Pufferschaltung 4 wird lediglich ein in bezug auf vereinfachend rechteckig gedachter Sendeimpulse mittlerer Strom gezogen.

## Patentansprüche

1. Netzteil (1) für die Spannungsversorgung für einen Bus (6,7), der Information und Energie für die Bordnetze von Busankopplern und Busgeräten führt, insbesondere für den Bus der EIBA (European Installation Bus Association), wobei an einer Schnittstelle eines Busankopplers Busgeräte für Anwenderfunktionen anschließbar sind, **dadurch gekennzeichnet**, daß eine erste aktive Strombegrenzungseinrichtung (2) eine Stromentnahme aus dem Netzteil (1) begrenzt, und daß eine zweite Strombegrenzungseinrichtung (3) mit vergleichsweise höherem Innenwiderstand zur Entkopplung parallel geschalteter Netzteile und unter übertragungstechnischen Belangen ausgeführt ist, wobei zwischen beiden Strombegrenzungseinrichtungen (2;3) eine energiespeichernde Pufferschaltung (4) angeordnet ist, die zur Speicherung von Energie zwischen zwei Sendeimpulsen der Informationsübertragung ausgelegt ist.

2. Netzteil nach Anspruch 1, **dadurch gekennzeichnet**, daß die zweite Strombegrenzungseinrichtung (3) ein ohmscher Widerstand ist.

3. Netzteil nach Anspruch 1 oder 2, **dadurch gekennzeichnet**, daß das Netzteil (1) mit einer Impedanzanpassung (5) versehen ist, die als Dämpfung die Übertragungsverhältnisse einer offenen Busleitung (6,9) optimiert.
